# EUROPEAN PATENT APPLICATION

(11) **EP 3 170 686 A1**
(43) Date of publication of application: **24.05.2017**
(21) Application number: 16199634.3
(22) Date of filing: 18.11.2016
(51) Int. Cl.: B60G 11/27, B60G 99/00, F16F 9/04, F16F 9/05

(54) **PISTON HOUSING FOR AIR SPRING**

(30) Priority: 19.11.2015 TR 201514617
(71) Applicant: Sampa Otomotiv Sanayi Ve Ticaret Anonim Sirketi, 55300 Samsun (TR)
(72) Inventor: ERDOGAN, Hakan Salih, 55300 Samsun (TR); AKSU, Mustafa, 55300 Samsun (TR)
(74) Representative: Sevinç, Erkan

(57) **Abstract**

The present invention relates to an air spring (1), providing the suspension between the cab and the frame in the vehicles, comprising at least one body (2); at least one cover (4); at least one bellow (3) that extends between the body (2) and the cover (4) in an airtight manner; at least one piston (6) that moves according to the distance between the cab and the frame; at least one control valve (5) that adjusts the air pressure inside the bellow (3) according to the movement of the piston (6); at least one housing (9) that enables the piston (6) to be mounted to the body (2) so as to axially move according to the change in the distance; at least one flange (7) that surrounds the end of the piston (6) facing the cover, that limits the movement of the piston (6) in the direction of the body (2) and that is integrated with the piston (6); at least one stopper (10) that is disposed at the other end of the piston (6) and that extends from the piston (6) to the housing (9) as a protrusion; at least one channel (8) that is arranged inside the housing (9), and at least one step (11) that is arranged on the at least one channel (8) wherein the stopper (10) moves and that limits the axial movement of the piston (6).

## Description

The present invention relates to an air spring that comprises a control valve and a housing that facilitates the mounting of the piston that provides the control of the said valve.

In heavy vehicles and light commercial vehicles, air springs are used, that absorb the vibrations between the vehicle frame and the driver's cab generated due to the road conditions. The air pressure inside the air spring is adjusted according to the distance between the frame and the cab by means of a control valve disposed into the air spring. When the distance between the frame and the cab increases, the control valve allows air discharge from the air spring, and when the said distance decreases, the control valve enables air intake into the air spring. Thus, the air spring is not subjected to sudden pressure changes. The said distance between the frame and the cab changes as a piston disposed into the air spring moves in response to the distance change and transfers the said movement to the control valve by means of a mechanical connection. The piston is movably disposed into the air spring. Stoppers are provided on the piston so as to limit the predetermined operation range of the piston. One of the said stoppers is produced so as to stretch to provide the mounting of the piston to the air spring. The stopper may be deformed and broken during the mounting due to its flexibility. Therefore, the production cost and the assembly time of the air spring increase.

In the state of the art European Patent Document No. EP2131059, a piston is disclosed, that is used in a pneumatic suspension air spring comprising an integrated control valve and that has a radially-movable claw.

The aim of the present invention is the realization of an air spring that provides savings in assembly time and production costs.

The air spring realized in order to attain the aim of the present invention, explicated in the first claim and the respective claims thereof, comprises at least one body; at least one cover that is disposed on the upper section thereof with respect to the body; at least one bellow that is disposed between the body and the cover in an airtight manner with one fixed to the body and the other end to the cover; at least one piston that moves upwards and downwards according to the change in the distance between the cab and the frame; at least one control valve that adjusts the air pressure inside the bellow according to the movement of the piston; at least one housing that enables the piston to be movably mounted to the body; at least one flange that limits the movement of the piston on the housing, that is integrated to the piston and that is disposed on the end of the piston facing the cover and at least one stopper that is disposed at the other end of the piston and that extends from the piston to the housing as a protrusion; at least one channel that is arranged on the inner surface of the housing, and at least one step that is arranged on the channel wherein the stopper axially moves upwards and downwards and that limits the axial movement of the piston together with the stopper.

The air spring of the present invention comprises at least one slit that is arranged inside the housing and that allows the housing to stretch such that the diameter thereof increases during the mounting of the piston to the housing. By means of the said slit, while the piston is mounted to the housing, the piston can be fitted into the housing. The stopper on the piston goes over the step in the housing and moves over the channel.

In an embodiment of the present invention, the air spring comprises at least one slit that is longitudinally disposed on the housing such that one end is open and the other end is closed. The slit enables the housing to stretch without any permanent deformation while the piston is mounted to the housing. That one end of the slit is open enables the housing to stretch more easily with respect to the case wherein both ends of the slit are closed.

In an embodiment of the present invention, the air spring comprises the housing that has at least one lower section that is position inside the body and at least one upper section that is positioned outside the body when the housing is fixed onto the body. The outer diameter of the upper section is wider than the outer diameter of the lower section. As the upper section bears against the body while the housing is mounted to the body, the housing stops moving inside the body and the mounting process is completed.

In an embodiment of the present invention, the housing comprises the step that is arranged at the inner side of the upper section and that extends towards the center of the housing as a protrusion. By means of the step, the wall thickness of the upper section is increased.

In an embodiment of the present invention, the housing comprises the slit, the length of which is equal to or greater than the length of the upper section in the vertical axis. Thus, the slit extends at least along the upper section. The force required to stretch the housing while the piston is mounted to the housing is inversely proportional to the length of the slit. As the length of the slit increases, the force decreases. Thus, the housing is enabled to stretch without being subjected to permanent deformation.

In an embodiment of the present invention, the housing comprises the slit, the open end of which is disposed on the upper section and the closed end of which is disposed on the lower section. Thus, as the slit stretches from the open end thereof, the inner diameter of the housing gets wider.

In an embodiment of the present invention, the air spring comprises at least two slits that are disposed on the housing so as to face each other at equal intervals around the housing. Thus, while the housing stretches, the load is homogeneously distributed on the housing. Moreover, the amount of stretching on the housing is balanced with respect to the diameter of the housing. Thus, the housing is prevented from being deformed while the piston is mounted.

In an embodiment of the present invention, the body comprises at least one extension that extends towards the housing, that almost completely fills the gap formed by the slit when the housing and the body are mounted and that has a width at least as much as the width of the slit. When the housing is mounted onto the body, the said extensions fill in the slit. Thus, the piston, that is fitted into the housing by stretching the housing, is prevented from dislodging after the assembly is completed.

The subject-matter of the present invention is the realization of the air spring comprising a housing that has the slit facilitating the mounting of the piston thereon. Thus, savings in production costs and production time are provided.

The air spring realized in order to attain the aim of the present invention is illustrated in the attached figures, where:
Figure 1 - is the sideways cross-sectional view of the air spring.
Figure 2 - is the perspective view of the piston, the housing and the body.
Figure 3 - is the sideways cross-sectional view of the piston, the body and the housing in the assembled state.
Figure 4 - is the view of detail X in Figure 3.
Figure 5 - is the perspective view of the housing.
Figure 6 - is the bottom perspective view of the housing.
Figure 7 - is the perspective view of the piston.
Figure 8 - is the perspective view of the body.

The elements illustrated in the figures are numbered as follows:
- 1.: Air spring
- 2.: Body
- 3.: Bellow
- 4.: Cover
- 5.: Control valve
- 6.: Piston
- 7.: Flange
- 8.: Channel
- 9.: Housing
- 10.: Stopper
- 11.: Step
- 12.: Slit
- 13.: Extension
- 14.: Upper Section
- 15.: Lower Section

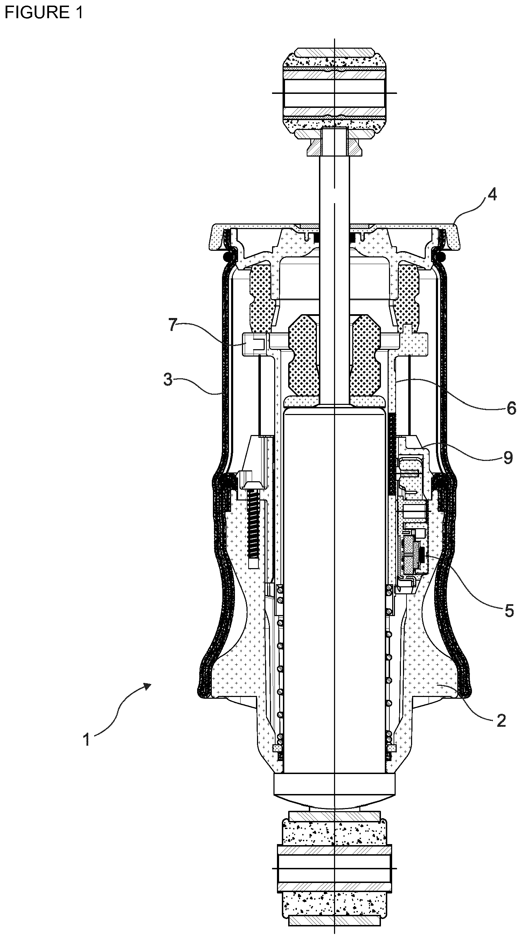

The air spring (1), providing the suspension between the cab and the frame in the vehicles, comprises at least one body (2); at least one cover (4); at least one bellow (3) that extends between the body (2) and the cover (4) in an airtight manner; at least one piston (6) that moves according to the distance between the cab and the frame; at least one control valve (5) that adjusts the air pressure inside the bellow (3) according to the movement of the piston (6); at least one housing (9) that enables the piston (6) to be mounted to the body (2) so as to axially move according to the change in the distance; at least one flange (7) that surrounds the end of the piston (6) facing the cover, that limits the movement of the piston (6) in the direction of the body (2) and that is integrated with the piston (6); at least one stopper (10) that is disposed at the other end of the piston (6) and that extends from the piston (6) to the housing (9) as a protrusion; at least one channel (8) that is arranged inside the housing (9), and at least one step (11) that is arranged on the at least one channel (8) wherein the stopper (10) moves and that limits the axial movement of the piston (6) (Figure 1, Figure 2, Figure 3, Figure 4).

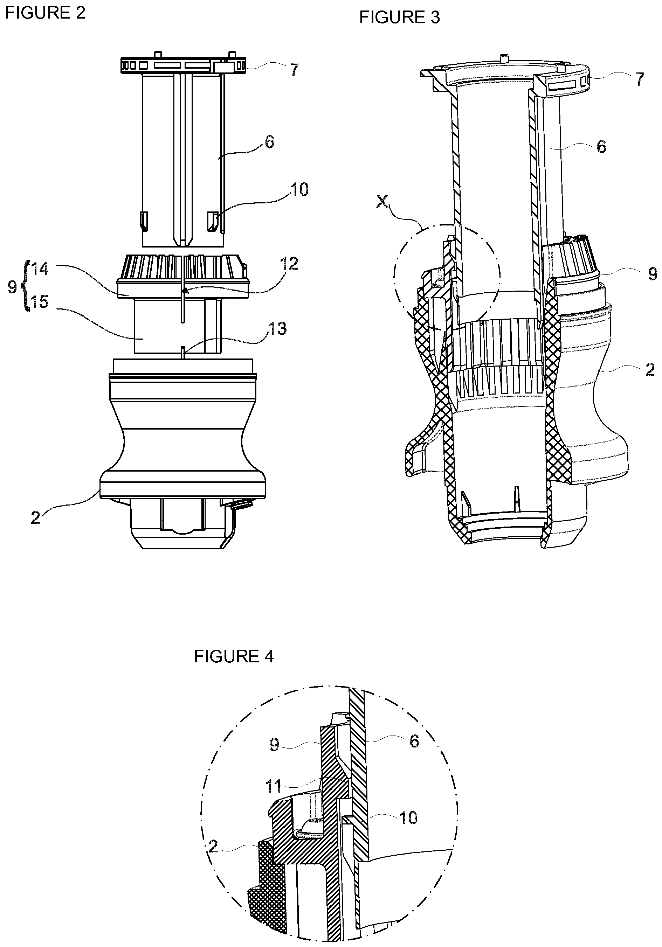

The air spring (1) of the present invention comprises at least one slit (12) that is arranged on the housing (9) and that allows the housing (9) to stretch during the mounting of the piston (6) to the housing (9). By means of the slit (12), the step (11) over which the stopper (10) passes while the piston (6) is mounted into the housing (9) gets wider, thus facilitating the mounting process. Thus, the piston (6) is mounted to the housing (9) without deforming the housing (9), the stopper (10) and the step (11) (Figure 2, Figure 5, Figure 6).

The piston (6) moves upwards and downwards according to the change in the distance between the frame and the cab. Thus, the inner pressure of the air spring (1) is enabled to be balanced by means of the control valve (5) that is triggered with the movement of the piston (6) (Figure 1, Figure 2, Figure 3).

The axial movement of the piston (6) is limited in the downward direction with the flange (7) housing against the housing (9) and in the upward direction with the stopper (10) housing against the step (11) on the housing (9) (Figure 2, Figure 4). Thus, the operation range of the control valve (5) is limited according to the distance between the frame and the cab, and the air spring (1) is prevented from losing its inner pressure. The flange (7) has a diameter wider than the outer diameter of the housing (9). Therefore, the piston (6) is mounted to the housing (9) from the side where the stopper (10) is positioned (Figure 2, Figure 5, Figure 7).

After the piston (6) and the housing (9) are concentrically aligned, the piston (6) is fitted into the housing (9) (Figure 2). At the same time, the stopper (10) moves inside the channel (8). When the stopper (10) bears against the step (11) while moving inside the channel (8), the step (11) prevents the stopper (10) from moving inside the channel (8). At the same time, the slit (12) opens and the stopper (10) goes over the step (11) as the inner diameter of the housing (9) is increased and continues to moves inside the channel (8). The piston (6) moves until the flange (7) bears against the housing (9). The opposite ends of the stopper (10) and the step (11) during the mounting of the piston (6) to the housing (9) are tapered. Thus, the mounting of the piston (6) to the housing (9) is facilitated with the opening of the slit (12). The end of the step (11) facing the stopper (10) after the mounting process is completed has not matching form with the stopper (10), thus it is not possible for the stopper (10) to go over the step (11) (Figure 2, Figure 4).

In an embodiment of the present invention, the air spring (1) comprises the slit (12) that extends on the vertical plane of the housing (9) such that one end is open and the other end is closed. Thus, the portion where the step (11) is provided is enabled to be more easily stretched (Figure 2, Figure 5, Figure 6).

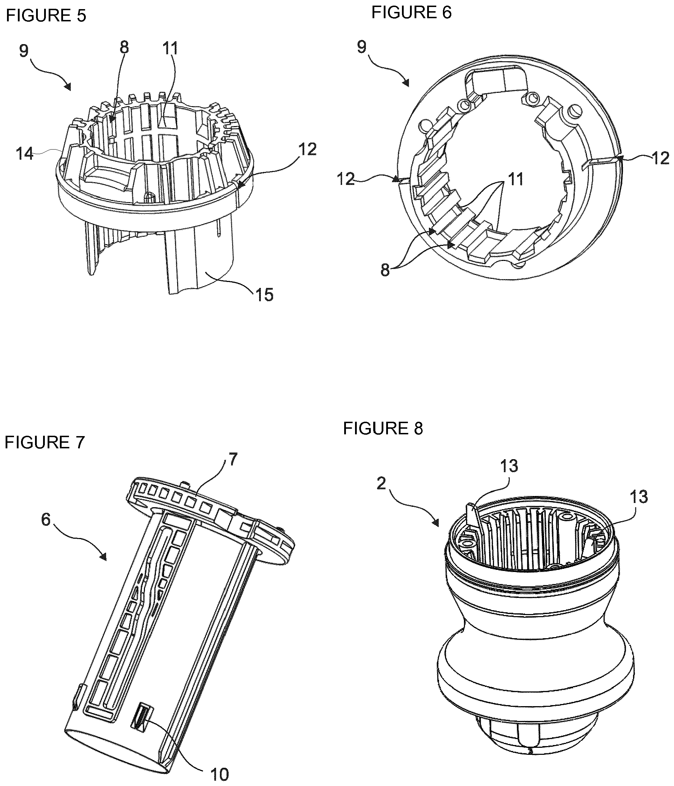

In an embodiment of the present invention, the air spring (1) comprises the housing (9) that has at least one lower section (15) remaining inside the body (2) and at least one upper section (14) remaining outside the body (2) when the housing (9) is mounted to the body (2) (Figure 2, Figure 5). The outer diameter of the upper section (14) is greater than the outer diameter of the lower section (15). Thus, the line where the piston (6) and the housing (9) are fixed to each other is determined, and mounting errors that may arise while the housing (9) is disposed onto the body (2) are prevented (Figure 2).

In an embodiment of the present invention, the housing (9) comprises the step (11) that is disposed on the upper section (14). Holes are arranged on the upper section (14), that enable the piston (6) to be fixed to the body (2). Therefore, the wall thickness of the upper section (14) is greater than that of the lower section (15). Thus, the strength of the upper section (14) against the assembly load is increased. Since no strength is required at the lower section (14) against loads such as assembly load, etc., the wall thickness of the lower section (15) is less than that of the upper section (14). Thus, the weight of the housing (9) is reduced (Figure 5).

In a derivative of the present invention, the housing (9) comprises the steps (11) positioned along the inner side of the upper section (14) so as to follow each other (Figure 6).

In an embodiment of the present invention, the housing (9) comprises the slit (12), the length of which is at least equal to the length of the upper section (14). The dimension of the slit (12) is directly proportional to the amount of stretching of the housing (9). By means of the slit (12) that has a size at least as much as the length of the upper section (14), the upper section (14) easily stretches while the piston (6) is mounted to the body (2), thus facilitating the mounting process (Figure 2, Figure 5).

In an embodiment of the present invention, the housing (9) comprises the slit (12), the open end of which is disposed on the upper section (14) and the closed end of which is disposed on the lower section (15) (Figure 5, Figure 6). The open end of the slit (12) and the step (11) are provided at the upper section (14) on the housing (9). Thus, the region where the stopper (10) comes across the step (11) is the part of the housing (9) that has the potential of stretching the most.

In an embodiment of the present invention, the air spring (1) comprises at least two slits (12) that are oppositely disposed on the housing (9) (Figure 6). Thus, during the mounting process, the load originated from the stretching on the housing (9) is enabled to be homogeneously distributed.

In an embodiment of the present invention, the body (2) comprises at least one extension (13) that extends towards the housing (9) and that almost completely fills in the slit (12) when the housing (9) and the body (2) are mounted. The flexibility of the housing (9) is limited as the extension (13) fills in the slit (12), and the piston (6) and the body (2) are prevented from being separated from each other (Figure 2, Figure 8). The extension (13) has a shape matching that of the slit (12).

The present invention relates to an air spring (1) that has the housing (9) facilitating the mounting of the piston (6) to the housing (9) by means of the slit (12), and that provides savings in production costs and production time.

## Claims

1. An air spring (1), providing the suspension between the cab and the frame in the vehicles, comprising at least one body (2); at least one cover (4); at least one bellow (3) that extends between the body (2) and the cover (4) in an airtight manner; at least one piston (6) that moves according to the distance between the cab and the frame; at least one control valve (5) that adjusts the air pressure inside the bellow (3) according to the movement of the piston (6); at least one housing (9) that enables the piston (6) to be mounted to the body (2) so as to axially move according to the change in the distance; at least one flange (7) that surrounds the end of the piston (6) facing the cover (4), that limits the movement of the piston (6) through the direction of the body (2) and that is integrated with the piston (6); at least one stopper (10) that is disposed at the other end of the piston (6) and that extends from the piston (6) to the housing (9) as a protrusion; at least one channel (8) that is arranged inside the housing (9), and at least one step (11) that is arranged on the at least one channel (8) wherein the stopper (10) moves and that limits the axial movement of the piston (6), **characterized in that** at least one slit (12) is disposed on the housing (9) and enables the housing (9) to stretch while the piston (6) is mounted to the housing (9).

2. An air spring (1) as in Claim 1, **characterized by** the slit (12) that extends on the vertical plane of the housing (9) such that one end is open and the other end is closed.

3. An air spring (1) as in Claim 1 or 2, **characterized by** the housing (9) that has at least one lower section (15) remaining inside the body (2) and at least one upper section (14) remaining outside the body (2) when the housing (9) is mounted to the body (2).

4. An air spring (1) as in Claim 3, **characterized by** the step (11) that is disposed on the upper section (14).

5. An air spring (1) as in Claim 3 or 4, **characterized by** the slit (12), the length of which is almost as much as the length of the upper section (14).

6. An air spring (1) as in any one of the Claims 3 to 5, **characterized by** the slit (12), the open end of which is disposed on the upper section (14) and the closed end of which is disposed on the lower section (15).

7. An air spring (1) as in any one of the above claims, **characterized by** at least two slits (12) that are oppositely disposed on the housing (9).

8. An air spring (1) as in any one of the above claims, **characterized by** at least one extension (13) that is disposed on the body (2), that extends from the body (2) towards the housing (9) and that almost completely fills in the slit (12) when the housing (9) and the body (2) are mounted.
